# EUROPÄISCHE PATENTANMELDUNG

(11) **EP 1 008 418 A1**
(43) Veröffentlichungstag der Anmeldung: **14.06.2000**
(21) Anmeldenummer: 99109752.8
(22) Anmeldetag: 18.05.1999
(51) Int. Cl.: B23P 19/04, E04F 21/00, B60J 10/00

(54) **Vorrichtung zum automatischen Eindrücken von strangförmigen Dichtungsprofilen**

(30) Priorität: 07.12.1998 DE 19856244
(71) Anmelder: Lemuth GmbH, 98617 Meiningen (DE)
(72) Erfinder: Lemuth,Meinhard, 98639 Metzels (DE)
(74) Vertreter: Liedtke, Klaus, Dr.

(57) **Zusammenfassung**

Der Erfindung liegt die Aufgabe zugrunde, eine kompakte und einfach handhabbare Vorrichtung zum Eindrücken von Dichtungen (2) in Nuten (1) von Bauteilen, insbesondere von Rahmen von Fenstern, Türen, Toren und dergleichen zu schaffen, bei der das Eindrücken der Dichtung (2) für das gesamte zu bearbeitende Element ohne Unterbrechung in einem einzigen Arbeitsgang ohne Andrückrolle und ohne Führung auf einem aufwendigen Trägergestell möglich ist.

Erfindungsgemäß gelingt die Lösung der Aufgabe dadurch, daß an einem Führungskanal zwei gegenüberliegende Transportriemen (5,6) angeordnet sind, die eine so hohe Längskraft in das Dichtungsprofil (2) einleiten, daß allein die eingeleitete Langskraft im Dichtungsprofil das Eindrücken des Dichtungsprofils (2) in eine Nut (1) ermöglicht.

Die Erfindung betrifft eine Vorrichtung zum automatischen Eindrücken von strangförmigen Dichtungsprofilen (2) in Nuten von Bauteilen, insbesondere von Rahmen von Fenstern, Türen, Toren und dergleichen, mit einem Riementrieb aus Rollen und Transportriemen (5,6).

## Beschreibung

Die Erfindung betrifft eine Vorrichtung zum automatischen Eindrücken von strangförmigen Dichtungsprofilen in Nuten von Bauteilen, insbesondere von Rahmen von Fenstern, Türen, Toren und dergleichen, mit einem Riementrieb aus Rollen und Transportriemen.

Im Stand der Technik sind verschiedene Vorrichtungen zum automatischen Eindrücken von Dichtungsprofilen in Nuten von Bauteilen bekannt, die auf Grundrahmen oder Schlitten angeordnet sind und parallel zu der Ebene geführt werden, in die das Dichtungsprofil mittels Einpressrollen eingedrückt werden soll.

Nach EP 0 220 429 A1 ist eine Vorrichtung zum Einlegen von flexiblen Dichtungsprofilen bekannt, bei der das Dichtungsprofil unmittelbar unter eine Andrückrolle führbar ist und durch die Andrückrolle in die Ebene, in der die Vorrichtung geführt wird, eingedrückt wird. Nachteilig bei dieser Vorrichtung ist, daß ein Eindrücken von Dichtungen in eine Ebene, die senkrecht aufder Rahmenebene steht, nicht möglich ist.

In DE 42 21 164 C2 eine Vorrichtung zum automatischen Eindrücken von flexiblen Dichtungsprofilen beschrieben, die über eine Tragereinheit parallel zur Rahmenebene geführt wird und flexible Dichtungsprofile mit Hilfe eines Riementriebes, der an einer Seite des Dichtungsprofils angeordnet ist, transportiert wird und mittels einer Eindrückrolle in eine Nut eingedrückt wird, die Dichtungen auch in eine Ebene, die senkrecht auf der Rahmenebene steht, eingedrückt werden kann. Nachteilig bei dieser Vorrichtung ist, daß durch den Riementrieb nur eine geringe Längskraft in das Dichtungsprofil eingeleitet werden kann, so daß das Eindrücken des Dichtungsprofils über eine Andruckrolle erfolgen muß, wozu eine exakte Führung der Vorrichtung entlang des Nutverlaufs über ein aufwendiges Trägergestell parallel zur Rahmenebene erforderlich ist.

Der Erfindung liegt die Aufgabe zugrunde, eine kompakte und einfach handhabbare Vorrichtung zum Eindrücken von Dichtungen in Nuten von Bauteilen, insbesondere von Rahmen von Fenstern, Türen, Toren und dergleichen zu schaffen, bei der das Eindrücken der Dichtung für das gesamte zu bearbeitende Element ohne Unterbrechung in einem einzigen Arbeitsgang ohne Andrückrolle und ohne Führung auf einem aufwendigen Trägergestell möglich ist,

Erfindungsgemäß wird die Aufgabe dadurch gelöst, daß an einem Führungskanal zwei gegenüberliegende Transportriemen angeordnet sind, die eine so hohe Längskraft in das Dichtungsprofil einleiten, daß allein die eingeleitete Längskraft im Dichtungsprofil das Eindrücken des Dichtungsprofils in eine Nut ermöglicht.

Durch die erfindungsgemäße Verwendung von zwei gegenüberliegenden Transportriemen, die hohe Langskräfte in das Dichtungsprofil einleiten, ergibt sich eine kompakte Bauweise, die sowohl ein Schwenken der Vorrichtung innerhalb des zu bearbeitenden Raumes als auch den Verzicht auf ein aufwendiges Trägergestell zur Führung der Vorrichtung ermöglicht. Durch die Möglichkeit der manuellen Führung der Vorrichtung für beliebige Verläufe von Nuten ergibt sich insbesondere für kleine Serien von zu bearbeitenden Elementen durch den möglichen Verzicht auf Trägergestelle zur Führung eine deutliche Steigerung der Produktivität, da insbesondere der Aufwand zur Realisierung der Konturverfolgung durch vorher eingegebene Programme oder sensorischer Nachführung entfallen kann. Für große Serien von zu bearbeitenden Elementen ist eine Kombination der erfindungsgemäßen Vorrichtung mit bekannten Trägersystemen zur automatisierten Führung der Vorrichtung möglich.

Die Erfindung wird im Folgenden anhand eines Ausführungsbeispieles näher erläutert.

In den zugehörigen Zeichnungen zeigen:

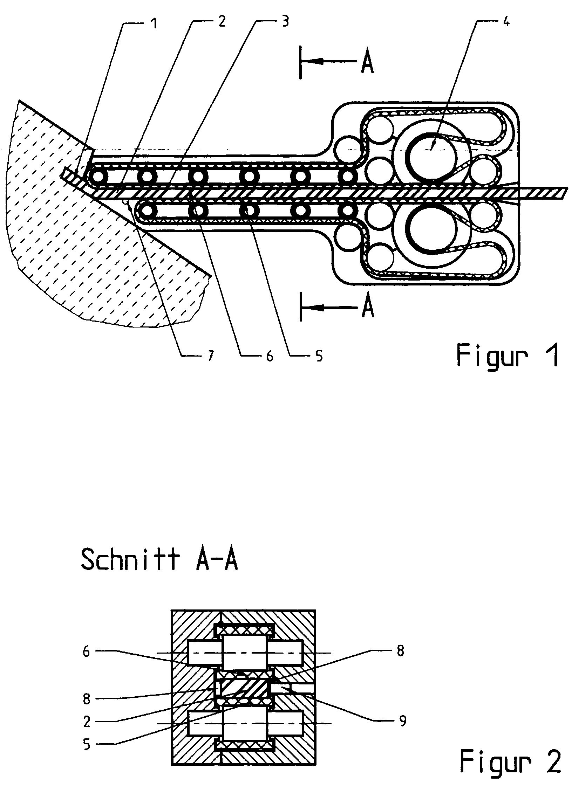

Figur 1 einen schematischen Schnitt durch die erfindungsgemäße Vorrichtung
   und
Figur 2 einen schematischen Schnitt durch den Führungskanal.

Über mittels Antriebsrollen 4 angetriebene Transportriemen 5 und 6 wird ein flexibles Dichtungsprofil 2 einer Vorratsrolle entnommen und einem Führungskanal 3 zugeführt. Die Transportriemen 5 und 6 werden mit Hilfe von Führungsrollen in einer definierten Lage gehalten. Der Führungskanal 3 wird an zwei gegenüberliegenden Seiten durch Führungsschienen 8, deren Form der des Dichtungsprofils 2 angepaßt ist, und an den zwei weiteren gegenüberliegenden Seiten durch die Transportriemen 5 und 6 begrenzt. Durch einen Anpreßdruck der Transportriemen 5 und 6 an das Dichtungsprofil 2 wird eine Längskraft in das Dichtungsprofil 2 eingeleitet, so daß das flexible Dichtungsprofil 2 in die Nut 1 des Bauteiles eingedrückt wird.
Die Vorrichtung kann mit einer zusätzlichen Befeuchtungseinrichtung 7 versehen sein, um den Eindrückvorgang zu erleichtern. Ferner ist es möglich, daß an der Vorrichtung eine Schneideinrichtung 9 angebracht ist, mit der das flexible Dichtungsprofil 2 nach Erreichen der erforderlichen Länge abgeschnitten wird. Diese Zusatzeinrichtungen werden vorteilhaft in der Nähe der Austrittsstelle, an der das Dichtungsprofil 2 die Vorrichtung verläßt, angebracht.

### BEZUGSZEICHENLISTE

- 1: Nut
- 2: Dichtungsprofil
- 3: Führungskanal
- 4: Antriebsrollen
- 5: kürzerer Transportriemen
- 6: längerer Transportriemen
- 7: Befeuchtungseinrichtung
- 8: Führungsschienen
- 9: Schneideinrichtung

## Patentansprüche

1. Vorrichtung zum automatischen Eindrücken von strangförmigen Dichtungsprofilen (2) in Nuten (1) von Bauteilen, insbesondere von Fenstern, Türen, Toren und dergleichen, mit einem Riementrieb aus Rollen und Profitriemen, **dadurch gekennzeichnet**, daß die Vorrichtung einen Führungskanal (3) zur Führung der Dichtungsprofile (2) enthält, bei dem an zwei Seiten jeweils ein angetriebener Transportriemen (5,6) angeordnet ist.

2. Vorrichtung nach Anspruch 1, **dadurch gekennzeichnet**, daß ein Transportriemen (5) mit einer gegenüber dem zweiten Transportriemen (6) am Austritt des Führungskanals (3) größeren wirksamen Länge angeordnet ist.

3. Vorrichtung nach Anspruch 1 oder 2, **dadurch gekennzeichnet**, daß am Führungskanal (3) eine Schneideinrichtung (9) angeordnet ist.

4. Vorrichtung nach einem der vorhergehenden Ansprüche, **dadurch gekennzeichnet**, daß am Austritt des Führungskanals (3) eine Befeuchtungseinrichtung (7) angeordnet ist.

5. Vorrichtung nach einem der vorhergehenden Ansprüche, **dadurch gekennzeichnet**, daß die Führungsschienen (8) des Führungskanals (3) in ihrer Form dem Dichtungsprofil (2) angepaßt sind.
